Europäisches Patentamt

European Patent Office

Office européen des brevets

(11) Publication number: **0 021 553**
**B2**

(12) NEW EUROPEAN PATENT SPECIFICATION

(45) Date of publication of the new patent
specification: **19.09.90**

(21) Application number: **80200714.6**

(22) Date of filing: **19.06.80**

(51) Int. Cl.⁵: **A 22 C 21/06**

(54) An apparatus to cut out the vent of a bird.

(30) Priority: **19.06.79 NL 7904778**
**28.02.80 NL 8001202**

(43) Date of publication of application:
**07.01.81 Bulletin 81/01**

(45) Publication of the grant of the patent:
**06.02.85 Bulletin 85/06**

(45) Mention of the opposition decision:
**19.09.90 Bulletin 90/38**

(84) Designated Contracting States:
**AT BE CH DE FR GB IT LI LU NL SE**

(56) References cited:
DE-A-2 313 092      NL-A-7 807 089
FR-A-2 240 691      US-A-3 750 231
FR-A-2 299 816      US-A-3 921 255
FR-A-2 377 159      US-A-3 958 303
GB-A-1 507 002      US-A-4 117 570
GB-A-2 017 481      US-A-4 136 421
NL-A-7 801 689

(73) Proprietor: **TIELEMAN B.V.**
**Broekhuizerweg 6**
**NL-6983 BM Doesburg (NL)**

(72) Inventor: **Tieleman, Rudolph Josephus**
**Broekhuizerweg 8**
**Doesburg (NL)**

(74) Representative: **Kooy, Leendert Willem et al**
**OCTROOIBUREAU VRIESENDORP & GAADE**
**P.O. Box 266**
**NL-2501 AW The Hague (NL)**

EP 0 021 553 B2

Courier Press, Leamington Spa, England.

## Description

The present invention relates to an apparatus to cut out the vent of a bird, suspended from a hook of a conveyor, comprising firstly at least one rotatingly driven hollow knife which is secured to a slide which is reciprocal along guides in the direction of the bird, in which knife a vacuum can be generated, which slide is provided with a follower which engages a curved path of the apparatus, the knife being arranged about a vacuum pipe, and secondly means provided with a bottom clip to bring the bird's vent in the correct position opposite the knife.

Such apparatuses have been known in many configurations and in practice, such as in US—A—

3 958 303, they are mostly part of a series of processing apparatuses for birds, like hens, chickens and the like birds to be made ready for consumption, which birds are arranged as much as possible along the same conveyor.

It is a general problem to form the apparatus to cut out the vent such, that the birds with rather varying leg lengths and other dimensions, related to growth, are brought in the correct position opposite the cylindrical knives, that the knife makes a round incision to the correct depth around the vent of the bird without damaging the tail, and that in a reliable manner, the vacuum in the knives brings the cut-out vent, together with a part of the intestines, connected thereto and containing fecal contaminations, outside the bird.

It appeared that it is almost impossible to achieve all this with an apparatus, in which the slides and their followers will follow the fixed curved path under all circumstances.

The present invention tends to improve an apparatus of the above described type such, that the noticed general problems are abolished. When doing so one started from the fact that it is impossible to have the slides always follow the fixed curved path.

According to the invention all this is achieved in that said vacuum pipe is non-rotating and movable upwardly and downwardly in the slide, said means to bring the vent in the correct position opposite the knife comprise a positioning member, which can be moved up and down along the guides, and has a follower which has a backlashed curved path at the location where the vent is to be cut out, so that the downward movement of the positioning member stops as soon as the bottom clip engages the bird's bottom, and in that also the follower of the slide, at the location where the vent is to be cut out, has a backlash in the curved path, said backlash determining the cut depth of the rotating knife and being eliminated by a stop of the slide which engages the positioning member after a stop, which is connected to the non-rotating vacuum pipe, has engaged the positioning member.

To make sure that the positioning member can break the friction on the guides during its downward movement, the positioning member is preferably biassed by coil springs located about each of the guides.

As is already remarked above, measures should also be taken to prevent the tail, which is neither of the same size for all birds, from being damaged by the cylindrical knife. This is realized in the first place in that the positioning member is provided with a clip to keep the bird's tail away from the rotating knife, said clip being brought in the correct position by a curved path. The clip is preferably provided with slots, serving as a bearing for a roll with a tapered central portion which, when bringing the tail in the correct position, rolls along said tail.

Moreover the cylindrical knives are arranged about a non-rotating vacuum pipe which, preliminary to the severing operation, sucks the vent somewhat upwardly.

Passing the rotatingly driven hollow cylindrical knives as close along the back as possible, is a problem which requires special attention. If the knife is not adapted to pass closely along the back then the danger exists that the so-called rose bud will not be cut out and this leads to inadmissible contamination. The rose bud is a gland lying directly under the vent between the gut and the tail of the bird. In many, but not in all cases, the correct position is achieved by so-called clip hands, also provided in the apparatus. If, however, the birds are not suspended from the outwardly directed ankles, as is usual in Europe, but from the inwardly directed knees, as is usual in the USA, then said clip hands are neither sufficient. For the force with which they press against the birds should not be increased too much.

The invention also tends to improve this and, for some embodiments, even make the clip hands superfluous.

According to the invention this is achieved by having the bottom clip extend in a downwardly inclined manner in outward direction.

If the birds are suspended from the hooks of the conveyor with the ankles in inward direction the downward extension of the chest clip, in side view, is at least partially in the configuration of a circle section.

If clip hands are present, then the bottom clip has straight portions which, in side view, extend downwardly and outwardly at an angle, said angle being preferably approximately 30°.

During the downward movement of the positioning member the bottom clip engages the bottom bone of the bird and presses the bird in the direction of the positioning member, such that the spine of the bird is pressed against the positioning member.

According to the invention the positioning member is provided with a clip to keep the bird's tail away from the rotating knife, said clip being brought into the correct position by a curved path, and the clip is provided with slots serving as a bearing for a roll with a tapered central portion which, when bringing the tail in the correct position, rolls along said tail.

However, from FR — A — 2 299 816 an apparatus to cut out the vent of a bird is known in which the positioning member is provided with a clip to keep the bird's tail away from the knife, said clip being brought into the correct position by a curved path.

The invention will be further elucidated hereinafter on the basis of the drawing, in which by way of example an embodiment is shown of an apparatus according to the invention.

Fig. 1 shows a schematic side view in which, for clearness' sake, three of the eight slides and pertaining machine components have been omitted and no birds are shown, which birds are considered to be suspended from hooks of a chain conveyor encircling the apparatus.

Fig. 2 shows a plan view of fig. 1 without birds, but with the chain conveyor encircling the apparatus.

Fig. 3 shows in a larger scale a front view of a slide and a positioning member which are placed on two guide bars.

Fig. 4 shows a side view of fig. 3.

Fig. 5 shows, in a larger scale, a side view of a buckled bottom clip, and

fig. 6 shows the same as in fig. 5, but of a circle sector shaped bottom clip.

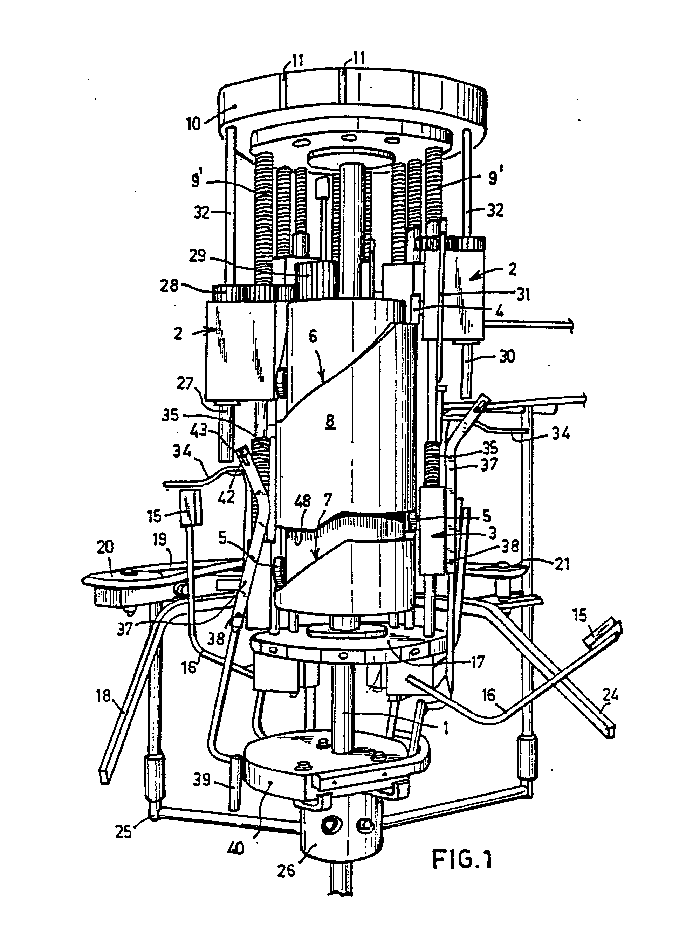

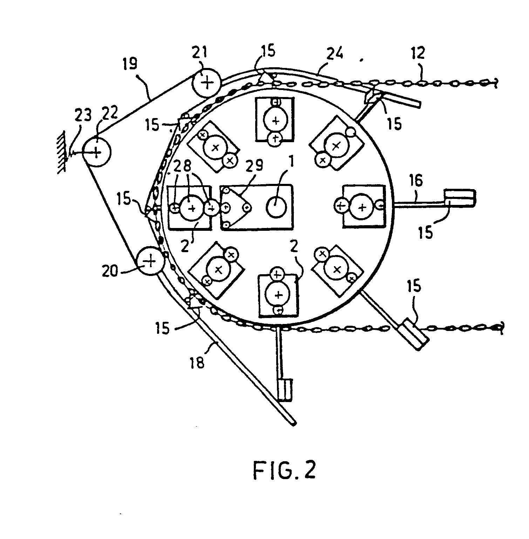

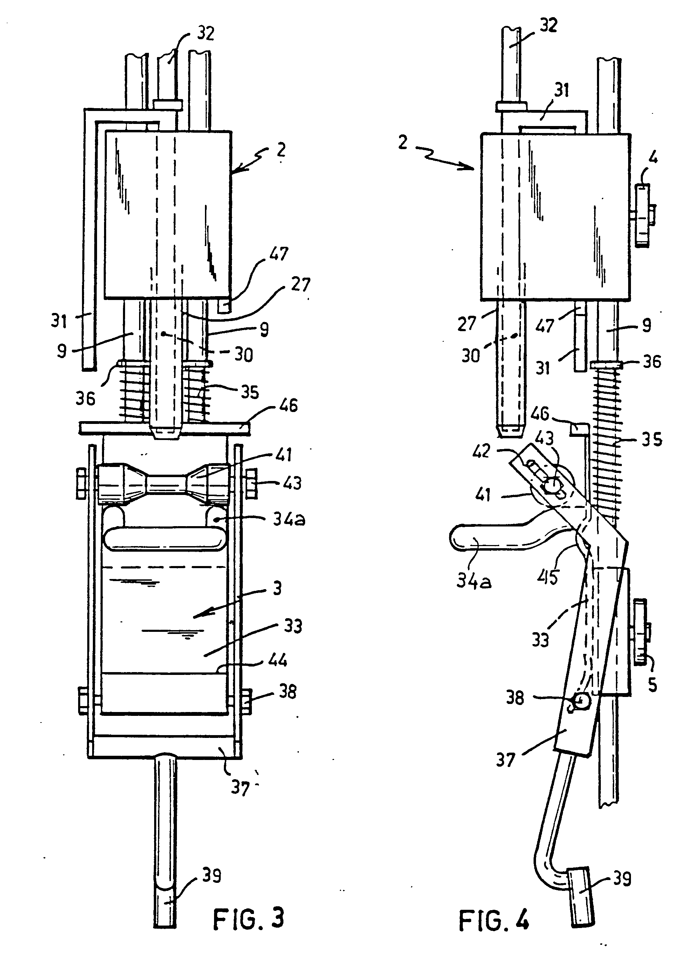

The apparatus shown in the drawing is in the configuration of a roundabout, and is provided with a hollow central shaft 1, on which each time pairs of slides 2 and positioning members 3 are supported one above the other, which are adapted to move upwardly and downwardly, under the influence of followers or rollers 4 resp. 5 rolling on curved paths 6 resp. 7 of a drum 8, along parallel bars 9 (fig. 3 and 4). In fig. 1 these parallel bars are encircled by springs 9' to enlarge the downward load exerted by the influence of gravity. In fig. 2 eight slides 2 are shown schematically, but the apparatus may of course in practice also have another number of pairs of slides and positioning members. In fig. 1 three of the eight slides have been omitted because it would otherwise have been impossible to describe the curved paths 6 and 7.

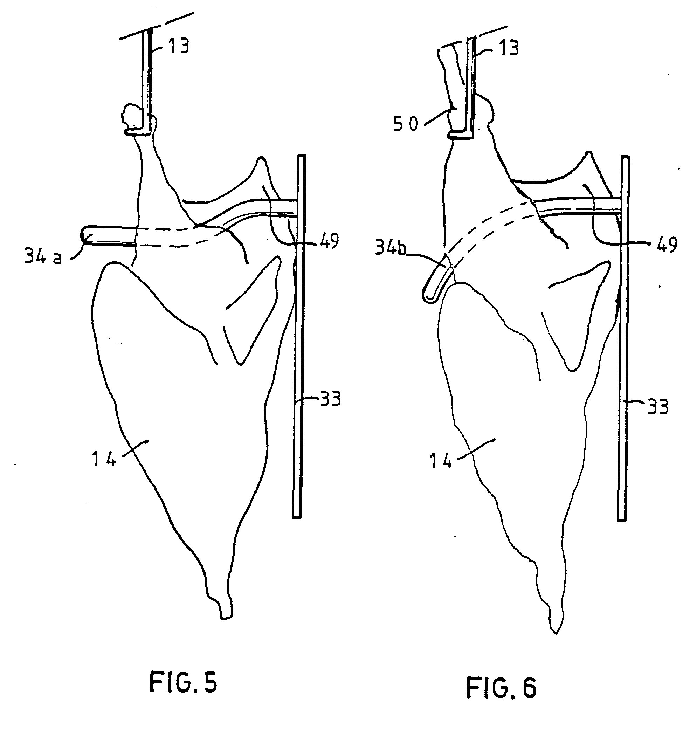

On the top end of the shaft 1 a drive wheel 10 is rotatably journalled. The peripheral edge of said wheel 10 is provided with recesses 11 to receive the (not shown) hooks which are suspended from a conveyor chain 12 (fig. 2), all this such that the hooks, slides 2 and positioning members 3 are adapted to be rotated about the shaft 1 synchronously and one above the other. The lower ends of the (not shown) hooks are in known manner adapted to be connected to frame clips 13 having such a configuration that the ankle joints of a bird 14 can be retained thereby. The lower ends of these frame clips 13 are shown in fig. 5 and 6 which will later on be discussed to explain the difference between the European and American mode of suspension of the birds.

In addition to the above described followers or rolls 4 and 5, rolling along curved paths 6 and 7, and to be further elucidated hereinafter, the apparatus also comprises a plurality of clip hands forcing the bird's back against the positioning members 3 at the right moment and with the right force. Said clip hands 15 are rotatably connected via a bar 16 to a base wheel 17, mounted on the shaft 1. Assuming that the rotation in fig. 1 and 2 takes place in the direction of movement of the hands of a clock, then the clip hands can be driven as follows: first the bars 16 arrive against a fixedly arranged ramp 18, by which the bar forces the smallest birds against the positioning members with a relatively small force, whereas the driving operation of the bars is taken over by a belt or string 19, passed along three pulleys 20-22 and in which pulley 22 biased by a spring 23, so that birds of any size are forced against the positioning members with almost the same force. The pulleys 20-22 and pertaining parts such as the spring 23 as well as the already discussed ramp 18 and a corresponding ramp 24 at the exit end of the roundabout are, as shown in fig. 1, together supported by a structure 25 which is connected to a fixed and non-rotating bush 26 of the apparatus.

The characteristics of the slides 2 and positioning members 3, which are most relevant for the invention, will be further elucidated hereinafter on the basis of fig. 3 and 4.

The slides 2 are provided with a follower, like a roll 4 (fig. 4), which engages the curved path 6 of fig. 1 and, as will appear later on, the rolls and the curved path need not cooperate with each other at all places of the curved path. The slide 2 is furthermore provided with a cylindrical knife 27 which, as is schematically indicated in fig. 1 and 2, can be driven rotatingly by a gear wheel system 28 which cooperates with a wide chain assembly 29, which is fixedly arranged in the apparatus. Said chain assembly 29 is embodied wide, so in fig. 1 it is embodied high, as the slide 2 with the rotating knife 27 should move downwardly during the time the vent is cut out. The cylindrical knife 27 is arranged about a non-rotating vacuum pipe 30, which is, however, movable upwardly and downwardly in the slide. The movement of the vacuum pipe 30 is controlled by a stop 31 which, for instance while extending outside the slide, may cooperate with the positioning member 3. The supply of subatmospheric pressure takes place via a tube 32.

The positioning member 3 consists of a vertical compression plate 33, being integrally formed with a bottom clip 34 to be further elucidated, which arrives between the legs of the birds when the birds enter the apparatus, and when the positioning member is lowered, arrives on the bottom of the bird. At the rear side of the compression plate 33 the follower or roll 5 is mounted again, which engages the curved path 7 of fig. 1, having a free stroke of approximately five cm so as to compensate the variations in the bird's leg length. The coil springs 35 between stops 36 on the bars 9 and the positioning members 3 are adapted to break the possible friction between the positioning member and the slide. Hereby the vent of various sizes of birds are at the same level with respect to the positioning member.

In order to keep the bird's tails away from the knives 27 the positioning members 3 are provided with a clip 37, which is adapted to rotate about a bolt 38 at the lower end of the vertical compression plate 33 if a lever pin 39 is charged by a curved path 40 (fig. 1) which is situated above the non-rotating bush 26. The clip 37 is made suitable for birds of rather varying sizes by a roll 41 with a tapered central portion, which is kept in place in slots 42 of the clip by means of bolts 43.

The compression plate 33 has a fold line 44 and a raised portion 45 in order to adequately support the back of the bird, and a stop section 46 at its upper side which, in addition to the stop 31 of the vacuum pipe 30, also cooperates with an adjustable stop 47 of the slide 2.

It may follow from the above that both the positioning members 3 and the slides 2 do not always follow the pertaining curved paths 6 and 7. If the slides would so do, then problems will arise when processing with the vacuum pipe 30 and the rotating knife 27. The operating of the apparatus will become clear from the next succession in operations, which the apparatus performs on a bird:

- when the bird turns into the apparatus, assumed at the position of 0°, the clip hand 15 rises under the influence of the ramp 18 and presses the bird against the positioning member 3 with a relatively low force;

- the curved path 7 of the positioning member 3 gradually declines at a stroke length of approximately 9 cm, and the upper run 48 (fig. 1) of the curved path allows for a free stroke of approximately 5 cm, so that the bottom clip 34 will engage the bird's bottom,

- the bar 16 of the clip hand 15 is now taken over by the belt or string 19, pressing the bird against the positioning member with a force, which is almost independent from the size of the bird,

- the tail of the bird is forced rearwardly (to the right in figure 4) by the roll 41 and in this operation also the upper fold line 45 of the compression plate 33 plays a part,

- the vacuum pipe 30 and the cylindrical knife 27 gradually move downwardly together with the slide 2 over a distance of approximately 15 cm from the position 120°, because the lower run of the curved path allows for a free stroke, the downward movement of the vacuum pipe 30 being stopped by engagement of the stop 31 with the stop 46 of the positioning member,

- if the vacuum pipe 30 arrives at the vent of the bird, the knife 27 moves further downwardly and rotatingly over a distance of approximately 3,5 cm, the cutting depth of the knife 27 being defined by the difference between the distance between the forward end of the knife 27 and the bird's bottom positioned against the bottom clip 34 and the distance between the stop 47 and the stop 46,

- the cylindrical knife and the vacuum pipe rise together and finally at position 220° the vacuum pipe is substantially at the same level as the lower side of the knife, so that the vent and a part of the intestine is hanging out of the bird,

- the clip hand 15 can now return to the extended position, which is allowed by the exit ramp 24.

In said operations it is essential that the vacuum pipe 30 does not rotate relative to the bird, so that one is sure that the intestine will not be damaged and the interior of the bird is not contaminated by fecal contaminations. The subatmospheric pressure in the vacuum pipe is admitted between the positions of approximately 120° and approximately 220°, but in any case just beyond the position of 180°.

It is also essential in said operations that the rotating knife 27, which is preferably grinded obliquely, severes as close along the back of the bird as possible, as otherwise the rose bud is not cut out. It appears that this may be accomplished by the bottom clips 34a and b, shown in fig. 5 and 6, which, owing to the outwardly downwardly curved configuration, charge the pelvis 49 of the bird 8 in the direction of the here schematically shown compression plate 33. When the positioning means are lowered the horizontal decompositions of the forces, exerted on the birds by the bottom clip, press the birds against the compression plate.

## Claims

1. An apparatus to cut out the vent of a bird, suspended from a hook of a conveyor, comprising firstly at least one rotatingly driven hollow knife (27) which is secured to a slide (2) which is reciprocated along guides (9) in the direction of the bird, in which knife a vacuum can be generated, which slide is provided with a follower (4) which engages a curved path (6) of the apparatus, the knife (27) being arranged about a vacuum pipe (30) and secondly means provided with a bottom clip (34) to bring the bird's vent into the correct position opposite the knife, characterized in that said vacuum pipe (30) is non-rotating and movable upwardly and downwardly in the slide, said means to bring the vent in the correct position opposite the knife (27) comprise a positioning member (3), which can be moved up and down along the guides (9), and has a follower (5) which has a backlashed curved path (7/48) at the location where the vent is to be cut out, so that the downward movement of the positioning member (3) stops as soon as the bottom clip (34) engages the bird's bottom, and in that also the follower (4) of the slide (2), at the location where the vent is to be cut out, has a backlash in the curved path (6), said backlash determining the cut depth of the rotating knife (27) and being delimited by a stop (47) of the slide (2) which engages the positioning member (3) after a stop (31), which is connected to the non-rotating vacuum pipe (30), has engaged the positioning member.

2. An apparatus according to claim 1, characterized in that the positioning member (3) is biassed in a downward direction by a spring member consisting of coil springs (35) which are located about each of the guides (9).

3. An apparatus according to claim 1 or 2, characterized in that the positioning member is provided with a clip (37) to keep the bird's tail away from the rotating knife (27), said clip being brought into the correct position by a curved path (40) and in that the clip (37) is provided with slots (42) serving as a bearing for a roll (41) with a tapered central portion which, when bringing the tail in the correct position, rolls along said tail.

4. Apparatus according to any of claims 1-3, characterized in that the rotation of the hollow knives (27) takes place by means of a gear assembly (28) which cooperates with a wide chain assembly (29), which is fixedly arranged in the apparatus.

5. Apparatus according to any of claims 1 to 4, characterized in that the vacuum pipe (30) cooperates with the positioning member (3) independently of the slide (2).

6. Apparatus according to claim 5, characterized in that the depth of the drilling operation with the rotating knives is adjustable by changing the position of the stop (47) connected to the slide, relative to the stop (31) of the vacuum pipe (30).

7. Apparatus according to any of claims 1-6, characterized in that the bottom clip (34b) extends in a downwardly inclined manner in outward direction.

8. Apparatus according to claim 7, characterized in that in side view the downward extension of the bottom clip is at least partially in the configuration of a circle sector.

9. Apparatus according to claim 7, characterized in that in side view the bottom clip (34a) has straight portions, extending downwardly and outwardly at an angle.

10. Apparatus according to claim 9, characterized in that said angle is approximately 30°.

## Patentansprüche

1. Eine Vorrichtung zum Ausschneiden des Afters eines Vogels, der an einem Haken eines Förderers hängt, mit an erster Stelle wenigstens einem drehbar getriebenen Hohlmesser (27) das an einem Schieber (2), der längs Gleitstücke (9) in Richtung des Vogels hin und her bewegt wird, montiert ist, in welchem Messer ein Vakuum erregt werden kann, welcher Schieber mit einem Nachfolger (4) der an eine Kurvenbahn (6) der Vorrichtung angreift, versehen ist, wobei das Messer (27) um ein Vakuumrohr (30) herum angeordnet worden ist, und an zweiter Stelle mit Mittel die einem Brustbügel (34) zugeordnet sind um den Vogelafter in die richtige Stellung gegenüber dem Messer zu bringen, dadurch gekennzeichnet, dass dieses Vakuumrohr (30) nicht drehbar und aufwärts und abwärts beweglich in dem Schieber angeordnet ist, wobei die Mittel um den After in die richtige Stellung gegenüber dem Messer (27) zu bringen ein Aufstellorgan (3) aufweisen, das aufwärts und abwärts der Gleitstücke (9) entlang bewegt werden kann, und einen Nachfolger (5) aufweist der eine mit Ausnehmungen versehenen Kurvenbahn (7/48) an der Stelle wo der After ausgeschnitten werden muss, aufweist, sodass die Abwärtsbewegung des Aufstellorgans (3) anhaltet sobald der Brustbügel (34) auf der Brust des Vogels anliegt, und dadurch dass auch der Nachfolger (2) des Schiebers (2), an der Stelle wo der After ausgeschnitten werden muss, eine Ausnehmung in der Kurvenbahn (6) aufweist, welche Ausnehmung die Schnitttiefe des drehenden Messers (27) bestimmt und die mittels eines Anschlags (47) des Schiebers begrenzt wird (2), der mit dem Aufstellorgan (3) in Berührung kommt, nachdem ein Anschlag (31), der mit dem nicht-drehbaren Vakuumrohr (30) verbunden ist, mit dem Aufstellorgan in Berührung gekommen ist.

2. Eine Vorrichtung gemäss Anspruch 1, dadurch gekennzeichnet, dass das Aufstellorgan (3) in Abwärtsrichtung von einem Federorgan, das aus Schraubfedern (35) besteht die um jedem der Gleitstücke (9) herum angeordnet sind, vorgespannt ist.

3. Eine Vorrichtung gemäss Anspruch 1 oder 2, dadurch gekennzeichnet, dass das Aufstellorgan mit einem Bügel (37) versehen ist um den Vogelschwanz von dem drehenden Messer (27) entfernt zu halten, wobei dieser Bügel mittels einer Kurvenbahn (40) in die richtige Stellung gebracht wird und dass der Bügel (37) mit Schlitzen (42), die als Lager für eine Rolle (41) mit einem konischen Zentralteil dienen, versehen ist, welcher Zentralteil, wenn der Schwanz in die richtige Stellung gebracht wird, längs dieses Schwanzes rollt.

4. Eine Vorrichtung gemäss einem der Ansprüche 1-3, dadurch gekennzeichnet, dass die Rotation des Hohlmessers (27) stattfindet mittels eines Getriebes (28), das mit einer breiten Kettenvorrichtung (29) zusammenwirkt, die fest in der Vorrichtung angeordnet worden ist.

5. Eine Vorrichtung gemäss einem der Ansprüche 1-4, dadurch gekennzeichnet, dass das Vakuumrohr (30) unabhängig von dem Schieber mit dem Aufstellorgan (3) zusammenwirkt.

6. Eine Vorrichtung gemäss Anspruch 5, dadurch gekennzeichnet, dass die Bohrtiefe mit den drehenden Messern dadurch eingestellt werden kann, dass die Position des Anschlags (47), der mit dem Schieber verbunden ist, in bezug auf den Anschlag (31) des Vakuumrohrs (30) geändert wird.

7. Eine Vorrichtung gemäss der Ansprüche 1-7, dadurch gekennzeichnet, dass der Brustbügel (34b) sich schräg abwärts nach aussen erstreckt.

8. Eine Vorrichtung gemäss Anspruch 7, dadurch gekennzeichnet, dass der sich Abwärts erstreckende Teil des Brustbügels in Seitenansicht mindestens teilweise die Form eines Kreisausschnittes hat.

9. Eine Vorrichtung gemäss Anspruch 7, dadurch gekennzeichnet, dass der Brustbügel (34a) in Seitenansicht gerade Teile aufweist, die sich abwärts und in einem Winkel auswärts erstrecken.

10. Eine Vorrichtung gemäss Anspruch 9, dadurch gekennzeichnet, dass dieser Winkel ungefähr 30° ist.

**Revendications**

1. Dispositif pour exciser l'ouverture anale d'un corps d'oiseau, suspendu par un crochet à un convoyeur, comprenant en premier lieu au moins un couteau creux (27) entraîné en rotation et fixé à un coulisseau (2) pouvant effectuer un mouvement de va-et-vient le long de guides (9) en direction de l'oiseau, couteau dans lequel on peut faire le vide, ledit coulisseau étant muni d'un élément suiveur (4) qui suit une piste courbe (6) du dispositif, le couteau (27) étant disposé autour d'un tube à vide (30), et en second lieu des moyens comportant une pince de poitrine (34) permettant d'amener la région anale de l'oiseau dans la position correcte face au couteau, caractérisé en ce qui ledit tuyau à vide (30) est non rotatif et peut être déplacé vers le haut et vers le bas dans le coulisseau, lesdits moyens pour amener la région anale en position correcte face au couteau (27) comprennent un élément de positionnement (3) pouvant être monté et descendu le long des guides (9), et comportant un élément suiveur (5) suivant une piste courbe avec une section à débattement (7/48) à l'emplacement où l'ouverture anale doit être excisée de façon que le mouvement descendant de l'élément de positionnement (3) s'arrête dès que la pince de poitrine (34) enserre la poitrine de l'oiseau, et en ce que l'élément suiveur (4) du coulisseau (2), à l'emplacement où l'ouverture anale doit être excisée, comprend une possibilité de débattement sur la piste courbe (6), ce débattement déterminant la profondeur d'incision du couteau rotatif (27) et étant délimité par une butée (47) du coulisseau (2) qui vient en contact avec l'élément de positionnement (3) après qu'une butée (31), qui est reliée au tuyau à vide non rotatif (30), est venue en contact avec l'élément de positionnement.

2. Dispositif selon la revendication 1, caractérisé en ce que l'élément de positionnement (3) est sollicité vers le bas par un dispositif à ressorts consistant en ressorts hélicoïdaux (35) disposés autour de chacun des guides (9).

3. Dispositif selon la revendication 1 ou 2, caractérisé en ce que l'élément de positionnement est muni d'un étrier (37) servant à maintenir le croupion de l'oiseau éloigné du couteau rotatif (27), cet étrier étant amené à la position correcte par une piste courbe (40) et en ce que l'étrier (37) est muni de fentes (42) servant de supports à un rouleau (41) à partie centrale évidée, qui, lorsqu'on amène le croupion dans la position correcte, roule le long dudit croupion.

4. Dispositif selon l'une quelconque des revendications 1 à 3, caractérisé en ce que la rotation des couteaux creux (27) est obtenue au moyen d'un ensemble d'engrenages (28) coopérant avec un ensemble à chaîne de grande largeur (29) disposé de façon fixe dans le dispositif.

5. Dispositif selon l'une quelconque des revendications 1 à 4, caractérisé en ce que le tuyau à vide (30) coopère avec l'élément de positionnement (3) indépendamment du coulisseau (2).

6. Dispositif selon la revendication 5, caractérisé en ce que la profondeur de l'opération d'incision effectuée par les couteaux rotatifs peut être réglée en modifiant la position de la butée (47) reliée au coulisseau, par rapport à la butée (31) du tuyau à vide (30).

7. Dispositif selon l'une quelconque des revendications 1 à 6, caractérisé en ce que la pince de poitrine (34b) s'étend de façon inclinée vers le bas et vers l'extérieur.

8. Dispositif selon la revendication 7, caractérisé en ce que la partie s'étendant vers le bas de la pince de poitrine présente, en vue latérale, au moins partiellement la forme d'un secteur de cercle.

9. Dispositif selon la revendication 7, caractérisé en ce que la pince de poitrine (34a) comprend, en vue latérale, des parties droites s'étendant vers le bas et vers l'extérieur en formant un certain angle.

10. Dispositif selon la revendication 9, caractérisé en ce que ledit angle est d'environ 30°.

FIG.1

FIG. 2

FIG. 3

FIG. 4

FIG. 5                    FIG. 6